(19) **Europäisches Patentamt**
**European Patent Office**
**Office européen des brevets**

(11) Veröffentlichungsnummer : **0 298 958 B1**

# (12) EUROPÄISCHE PATENTSCHRIFT

(45) Veröffentlichungstag der Patentschrift :
**18.09.91 Patentblatt 91/38**

(51) Int. Cl.⁵ : **H02K 17/16, H02K 17/18, H02K 21/12**

(21) Anmeldenummer : **86906279.4**

(22) Anmeldetag : **31.10.86**

(86) Internationale Anmeldenummer :
**PCT/DE86/00437**

(87) Internationale Veröffentlichungsnummer :
**WO 87/05754 24.09.87 Gazette 87/21**

(54) **BÜRSTENLOSER ELEKTRISCHER MOTOR.**

(30) Priorität : **20.03.86 DE 3609351**

(43) Veröffentlichungstag der Anmeldung :
**18.01.89 Patentblatt 89/03**

(45) Bekanntmachung des Hinweises auf die
Patenterteilung :
**18.09.91 Patentblatt 91/38**

(84) Benannte Vertragsstaaten :
**CH DE FR GB IT LI SE**

(56) Entgegenhaltungen :
**CH-A- 433 500**
**DE-A- 1 613 230**
**DE-A- 2 822 830**

(56) Entgegenhaltungen :
**DE-B- 1 256 309**
**DE-C- 387 076**
**DE-U- 8 427 704**
**FR-A- 840 873**
**GB-A- 1 213 287**
**US-A- 4 473 752**
**See also references of WO8705754**

(73) Patentinhaber : **ROBERT BOSCH GmbH**
**Postfach 10 60 50**
**W-7000 Stuttgart 10 (DE)**

(72) Erfinder : **HENNEBERGER, Gerhard**
**Teckstrasse 29**
**W-7141 Möglingen (DE)**
Erfinder : **SCHUSTEK, Siegfried**
**Adlerstrasse 21**
**W-7997 Immenstaat (DE)**

EP 0 298 958 B1

## Beschreibung

### Stand der Technik

Die Erfindung geht aus von einem bürstenlosen elektrischen Motor, insbesondere Servomotor, der im Anspruch 1 definierten Gattung.

Solche bürstenlosen Servomotoren finden ihren Einsatz als Direktantrieb für Handhabungsgeräte und Roboter. Die Rotoren dieser Motoren sind aus Gründen des erforderlichen magnetischen Rückschlusses im Rotor weitgehend massiv ausgebildet. Daher weisen sie ein relativ großes Trägheitsmoment auf.

Aus der DE-A-2822830 ist ein als Synchronmotor ausgebildeter Schrittmotor bekannt mit Dauermagnet-Läufer und mehrpoligem Ständer. Die Ständerwicklung ist dabei auf einzelne Hauptpole aufgebracht, welche an ihren dem Läufer zugekehrten Polflächen gezähnt sind.

Aus der FR-A 840873 ist ein als Asynchronmotor ausgebildeter bürstenloser elektrischer Motor bekannt, dessen Läufer als wicklungsloser Rotor in Form eines Hohlzylinders ausgebildet ist, welcher aus einem nichtmagnetischen Metall wie Aluminium oder Kupfer besteht. Der Widerstand des Rotorbleches bestimmt die Größe der Rotorströme.

Aus der DE-A 1613230 ist ein Außenläufermotor bekannt, welcher einen mit einer Abtriebswelle verbundenen Rotor zwischen einem Innenstator und einem Außenstator aufweist. Die beiden Statoren sind jeweils an einer Halbschale eines im wesentlichen symmetrischen, in der Mitte geteilten Gehäuses befestigt, wobei der Innenstator dicht auf einer von der einen Halbschale in das Gehäuse hineinragenden Nabe sitzt. Der als Zwischen- bzw. Außenläufer ausgebildete Rotor ist auf vier angegossenen, mit der Abtriebswelle verbundenen Armen gehalten.

Weiterhin ist ein bürstenloser elektrischer Schrittmotor bekannt (US-PS 3629626), der zur Erzielung eines massearmen Rotors, der einem einzigen Halbwellenimpuls einer Wechselspannungsquelle folgen kann, zwei konzentrische Statoren aufweist, die einen dünnwandigen, rohrförmigen Rotor innen und außen unter Bildung jeweils eines Luftspaltes umgeben. Die beiden Statoren tragen in einer gleichen Anzahl von gleichmäßig über den Statorumfang verteilten Nuten eine gleich ausgebildete Zweiphasenwicklung. Die eine Phase beider Statorwicklungen ist an eine Wechselspannung gelegt, während die andere Phase jeder Statorwicklung an einer durch eine Zweiweggleichrichtung aus der Wechselspannung gewonnenen pulsierenden Gleichspannung angeschlossen ist. In dem aus Fiberglas hergestellten Rotor sind Streifen aus magnetischem Material, z.B. Eisen, eingelegt. Die Breite der Streifen und ihr gegenseitiger Abstand entspricht jeweils einer Nutteilung.

### Vorteile der Erfindung

Der erfindungsgemäße elektrische Wechsel- oder Drehstrommotor, der als Asynchron- oder Synchronmotor ausgebildet sein kann, mit den Merkmalen des Anspruchs 1 hat den Vorteil, gegenüber konventionellen Servomotoren gleicher Abmessung ein höheres Drehmoment abgeben zu können und gleichzeitig ein geringeres Rotorträgheismoment aufzuweisen. Durch den inneren Stator kann der äußere Stator um ca. die halbe Nuthöhe im Außendurchmesser, reduziert werden und das für den magnetischen Rückschluß erforderliche Rotorjoch entfallen, das sich im inneren Stator wiederfindet. Die Wicklungen der einzelnen Stränge oder Phasen in den beiden Statoren sind so geschaltet, daß sich die Wirkungen beider Statorwicklungen addieren. Durch die beiden konzentrischen Statoren läßt sich damit das für die Momenterzeugung notwendige Bauvolumen besser nutzen. Durch das fehlende Rotorjoch läßt sich der hohlzylindrische Rotor dünnwandig ausbilden. Er enthält nur die Reaktionsteile, wie Kurzschlußwicklung beim Asynchronmotor und Dauermagnete beim Synchronmotor. Der Rotor ist damit massearm und sein Trägheitsmoment ist deutlich geringer als bei konventionellen Servomotoren mit gleichem Außendurchmesser.

In konstruktiver Hinsicht hat es sich als sehr vorteilhaft erwiesen, daß die beiden Statoren bei einer topfförmigen Ausbildung des Motorgehäuses am selben Gehäuseteil befestigbar sind, indem der äußere Stator an der Innenseite des Topfes und der innere Stator über Stege auf der Nabe des Topfes befestigt ist. Der Läufer kann dabei in einfacher Weise in der gleichen Nabe des topfförmigen Gehäuses gelagert werden, so daß sich insgesamt eine einfache und montagefreundliche Bauweise mit vorteilhaften elektrischen Eigenschaften bei gleichzeitig zweckmäßiger Kühlluftführung ergibt.

Durch die in den weiteren Ansprüchen aufgeführten Maßnahmen sind vorteilhafte Weiterbildungen und Verbesserungen des im Anspruch 1 angegebenen bürstenlosen Motors möglich.

Eine vorteilhafte Ausführungsform der Erfindung ergibt sich durch den Versatz der beiden Statoren um eine halbe Nutteilung. Hierdurch kann jeder Stator mit grober Nutteilung und einfachster Wicklung ausgeführt werden. Im Zusammenspiel beider Statoren ergibt sich eine bessere Annäherung der Felderregerkurve an die Sinusform und bei dauermagneterregten Synchronmotoren eine Reduktion der relativ starken Rastermomente.

Eine vorteilhafte Ausführungsform der Erfindung ergibt sich auch bei einem einfachen Käfigläufer mit geschlossen ausgebildeten Nuten, da die dann über den Käfigstäben verbleidenden Streustege die mechanische Festigkeit des Rotosrs wesentlich verbessern.

Eine vorteilhafte Ausführungsform der Erfindung ergibt sich auch durch das Vorsehen eines Doppelkäfigs im Rotor mit gemeinsamen Kurzschlußringen. Hierdurch erhält man einen deutlich drehzahlfesteren Rotor, so daß sich auch halboffene Nuten im Rotor realisieren lassen.

Eine vorteilhafte Ausführungsform der Erfindung ergibt sich ferner durch die vorgespannte Bandage aus nichtmagnetischem Material, z.B GFK oder nichtmagnetischem Edelstahl. Diese nimmt die an den Dauermagnetsegmenten angreifenden Fliehkräfte auf.

Zeichnung

Die Erfindung ist anhand von in der Zeichnung dargestellten Ausführungsbeispielen in der nachfolgenden Beschreibung näher erläutert. Es zeigen jeweils ausschnittweise :

| | |
|---|---|
| Fig. 1 | einen Längsschnitt eines Servomotors, |
| Fig. 2 bis 4 | jeweils einen Querschnitt des als Asynchronmotor ausgebildeten Servomotors in Fig. 1 längs der Linie II-II in Fig. 1, |
| Fig. 5 | einen Querschnitt des als Synchronmotor ausgebildeten Servomotors in Fig. 1 längs der Linie II-II in Fig. 1, |
| Fig. 6 | einen Querschnitt des als Asynchron- oder Synchronmotor ausgebildeten Servomotors in Fig. 1 längs der Linie II-II in Fig. 1 gemäß einem weiteren Ausführungsbeispiel. |

Beschreibung der Ausführungsbeispiele

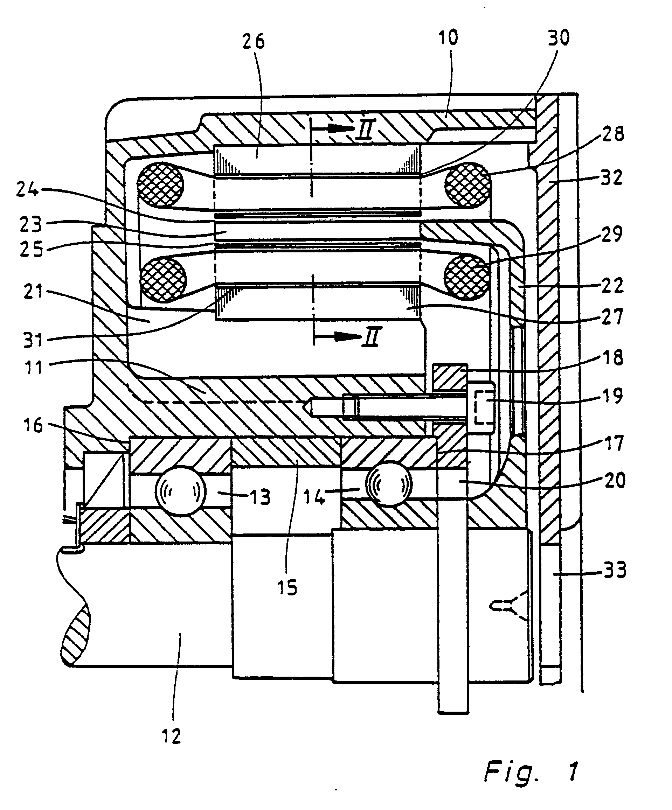

Der in Fig. 1 ausschnittweise im Längsschnitt zu sehende elektrische Servomotor weist ein topfförmiges Motorgehäuse 10 mit einer koaxialen hohlzylindrischen Nabe 11 auf. Im Innern der Nabe 11 ist eine Abtriebswelle 12 mittels zweier Kugellager 13, 14 drehbar gelagert, die in der Nabe 11 mittels eines Distanzringes 15 an Radialschultern 16, 17 an der Nabe 11 selbst und an einem die Nabe 11 abdeckenden Nabenschild 18 angepreßt werden. Das Nabenschild 18 ist mit Befestigungsschrauben 19 auf der Nabe 11 aufgeschraubt und weist eine zentrale Öffnung 20 auf, durch welche die Abtriebswelle 12 hindurchragt. Die Nabe 11 trägt am Außenumfang bis zum Boden des topfförmigen Motorgehäuses 10 reichende Stege 21, die gleichmäßig am Umfang der Nabe 11 verteilt angeordnet sind und axial verlaufen.

Mit der Abtriebswelle 12 ist eine etwa schalenförmige Trägerscheibe 22 fest verbunden, an deren Schalenrand ein rohrförmiger Rotor 23 befestigt ist, der von der Trägerscheibe 22 koaxial zur Abtriebswelle 12 freitragend wegstrebt. Der Rotor 23 ragt unter Belassung jeweils eines Luftspaltes 24 bzw. 25 auf beiden Seiten des Rotors zwischen zwei Statoren 26, 27 hinein. Von den beiden Statoren 26, 27, die üblicherweise als Blechpakete ausgebildet sind, ist der äußere Stator 26 am Motorgehäuse 10 befestigt, während sich der innere Stator 27 an den Stegen 21 auf der Nabe 11 abstützt. Die beiden Statoren 26, 27 tragen jeweils eine identische mehrphasige Statorwicklung 28, 29, die als Wellen- oder Schleifenwicklung, Spulen- oder Stabwicklung, Ein- oder Zweischichtwicklung ausgebildet sein kann.

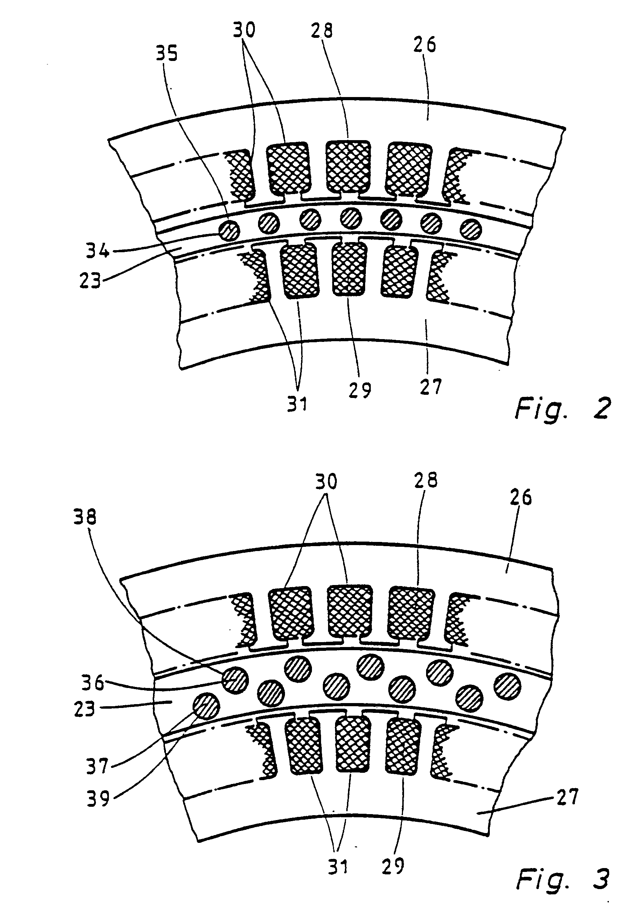

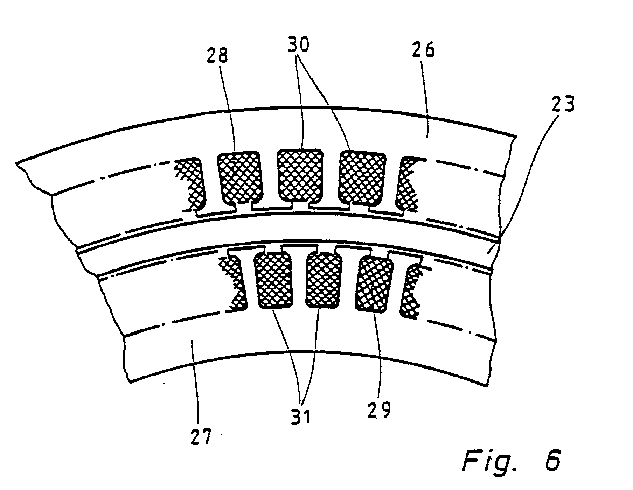

Wie besonders aus Fig. 2-6 zu sehen ist, sind die Statorwicklungen 28, 29 in konventioneller Weise in Nuten 30, 31 eingelegt, die über den Umfang der Statoren 26,27 gleichmäßig verteilt mit gleicher Nutteilung angeordnet sind. Die Nuten 30, 31 sind halboffen ausgeführt, wobei ihre Öffnungen jeweils dem Rotor 23 zugekehrt sind. Die Nutteilung in beiden Statoren 26, 27 ist gleich grob gewählt. In Fig. 2-5 sind die beiden Statoren so ausgerichtet, daß die Nuten 30, 31, d.h. ihre Mitten, in Radialrichtung miteinander fluchten. In Fig. 6 sind die beiden Statoren 26, 27 so gegeneinander verdreht, daß die Nuten um eine halbe Nutteilung gegeneinander verschoben sind. Das Motorgehäuse 10 ist auf seiner offenen Seite mit einem Gehäusedeckel 32 verschlossen, der eine zentrale Luftdurchtrittsöffnung 33 aufweist.

In Fig. 2-4 ist ein Querschnitt längs der Linie II-II in Fig. 1 des als Asynchronmotor ausgebildeten Motors ausschnittweise dargestellt. In Fig. 2 ist dabei der Rotor 23 als Käfigläufer ausgebildet, der in bekannter Weise in axial verlaufenden Nuten 34 im Rotor 23 eingelegte Leiter- oder Käfigstäbe 35 aufweist, die auf beiden Seiten des Rotors durch jeweils einen, hier nicht dargestellten Kurzschlußring miteinander verbunden sind. Die Nuten 34 sind geschlossen ausgebildet, wodurch die über den Käfigstäben 35 zum äußeren Stator 26.bzw. zum inneren Stator 27 hin liegenden Streustege die mechanische Festigkeit des Rotors 23 wesentlich verbessern.

Bei dem in Fig. 3 ausschnittweise im Querschnitt zu sehenden Asynchronmotor ist der Rotor 23 als Doppelkäfigläufer ausgebildet. Hier sind in zwei konzentrischen Ebenen wiederum Leiter- oder Käfigstäbe 36, 37 in gleichmäßig über den Umfang des Rotors 23 angeordneten geschlossenen Nuten 38, 39 eingelegt. Die Käfig-

3

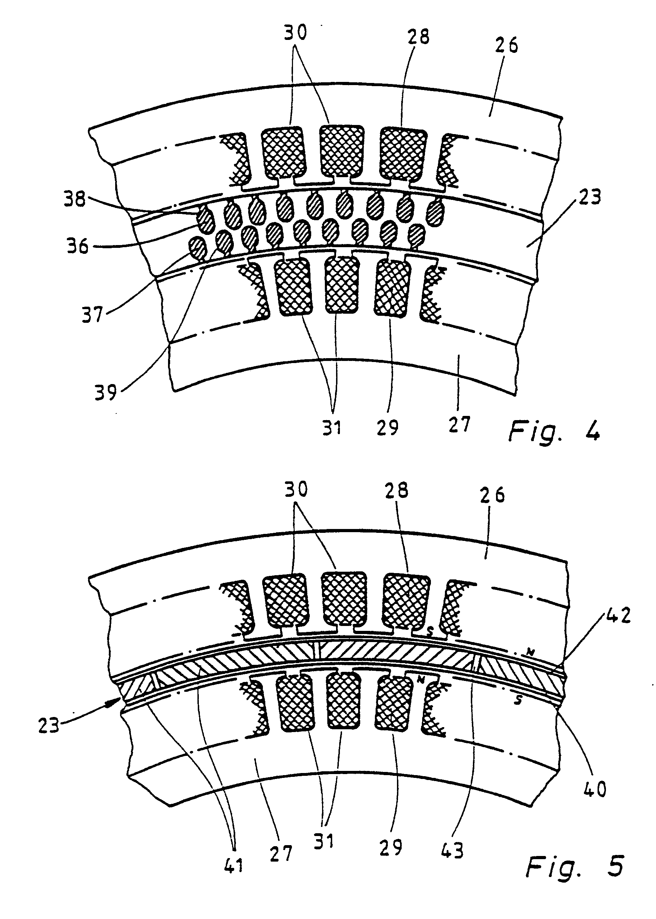

stäbe 36, 37 sind an beiden Enden durch gemeinsame, hier nicht dargestellte Kurschlußringe miteinander verbunden. Ein solcher Doppelkäfigläufer ist deutlich drehzahlfester als der Käfigläufer in Fig. 2, so daß — wie dies in Fig. 4 dargestellt ist — die Nuten 38, 39 auch halboffen ausgeführt werden können. Die Nutöffnungen der in der äußeren Ebene angeordneten Nuten 38 sind dabei dem äußeren Stator 26 und der in der inneren Ebene angeordneten Nuten 39 sind dem inneren Stator 27 zugekehrt.

In Fig. 5 ist ausschnittweise ein Schnitt längs der Linie II-II in Fig. 1 des als Synchronmotor ausgebildeten Servomotors dargestellt. Die Statoren 26, 27 mit den Statorwicklungen 28, 29 sind unverändert. Der Rotor 23 besteht aus einem dünnen nicht magnetischen Stützrohr 40, z.B. aus GFK oder nicht magnetischem Edelstahl, auf dem mit geringem Abstand voneinander Dauermagnetsegmente 41 aufgeklebt sind. Die Breite der Dauermagnetsegmente 41 in Umfangsrichtung des Rotors 23 entspricht hier etwa dem Vierfachen der Nutteilung. Die Dauermagnetsegmente 41 sind in Radialrichtung magnetisiert, so daß wechselweise der Nordpol der Dauermagnetsegmente 41 zum äußeren Stator 26 und der Südpol zum inneren Stator 27 und umgekehrt hin weist. Die an den Dauermagnetsegmenten 41 angreifenden Fliehkräfte werden von einer die Dauermagnetsegmente 41 überziehenden vorgespannten Bandage 42 aus GFK oder nicht magnetischem Edelstahl aufgefangen. Die Lücken 43 zwischen den Dauermagnetsegmenten 41 sind ebenfalls mit magnetisch nichtleitendem Material ausgefüllt.

## Patentansprüche

1. Bürstenloser elektrischer Motor, insbesondere Servomotor, mit einem Motorgehäuse (10), welches topfförmig mit einer koaxialen Nabe (11) ausgebildet und mit einem Gehäusedeckel (32) abgeschlossen ist, mit einem im Motorgehäuse befestigten hohlzylindrischen ersten Stator (26), der eine als Wellen- oder Schleifenwicklung, Spulen- oder Stabwicklung, Ein- oder Zweischichtwicklung ausgebildete, in Nuten (30, 31) einliegende mehrphasige Statorwicklung (28, 29) trägt, mit einem im Inneren des ersten Stators (26) unter Bildung eines Luftspaltes (24) koaxial zum Stator angeordneten, mit einer Abtriebswelle (12) verbundenen Rotor (23), der als Kurzschlußläufer (Asynchronmotor) oder als dauermagnetbestücktes Polrad (Synchronmotor) in Form eines massekleinen Hohlzylinders ausgebildet ist, welcher an einer mit der Abtriebswelle (12) drehfest verbundenen, etwa schalenförmigen Trägerscheibe (22) befestigt ist, sowie mit einem im Innern des ersten Stators (26) unter Bildung eines zweiten Luftspaltes (25) konzentrisch zum Rotor (23) angeordneten zweiten inneren Stator (27), der eine gleich ausgebildete Statorwicklung (29) trägt wie der erste äußere Stator (26) und sich auf Axialstegen (21) abstützt, welche außen auf der Nabe (11) sitzen und bis zum Boden des topfförmigen Motorgehäuses (10) reichen, wobei die Abtriebswelle (12) mit dem Rotor (23) im Innern der Nabe (11) drehbar gelagert ist.

2. Motor nach Anspruch 1, dadurch gekennzeichnet, daß die Nuten (30, 31) in beiden Statoren (26, 27) in gleicher radialer Ausrichtung angeordnet sind, so daß ihre Nutmitten miteinander fluchten.

3. Motor nach Anspruch 1, dadurch gekennzeichnet, daß die Nuten (30) des einen Stators (26) gegenüber den Nuten (31) des anderen Stators (27) um eine halbe Nutteilung verschoben angeordnet sind.

4. Motor nach einem der Ansprüche 1 bis 3, dadurch gekennzeichnet, daß der Rotor (23) als Käfigläufer mit in geschlossenen Nuten (34) eingelegten Leiterstäben (35) und zwei die Leiterstäbe (35) jeweils an beiden Enden miteinander verbindenden Kurzschlußringen ausgebildet ist (Figur 2).

5. Motor nach einem der Ansprüche 1 bis 3, dadurch gekennzeichnet, daß der Rotor (23) als Doppelkäfigläufer mit in zwei konzentrischen Ebenen angeordneten Nuten (38, 39) einliegenden Leiterstäben (36, 37) und zwei die Leiterstäbe (36, 37) jeweils an beiden Enden untereinander verbindenden Kurzschlußringen ausgebildet ist (Figur 3 und 4).

6. Motor nach Anspruch 5, dadurch gekennzeichnet, daß die Nuten (38, 39) halboffen ausgebildet sind, wobei die Nutöffnungen der in der äußeren Ebene angeordneten Nuten (38) dem äußeren Stator (26) und der in der inneren Ebene angeordneten Nuten (39) dem inneren Stator (27) zugekehrt sind (Figur 4).

7. Synchronmotor nach einem der Ansprüche 1 bis 3, dadurch gekennzeichnet, daß der hohlzylindrische Rotor (23) ein dünnes, nicht magnetisches Stützrohr (40) aufweist, auf dem in Radialrichtung magnetisierte Dauermagnetsegmente (41) mittels einer nichtmagnetischen Bandage (42) gehalten sind, und daß die Lücken (43) zwischen den Dauermagnetsegmenten (41) mit magnetisch nichtleitendem Material ausgefüllt sind (Figur 5).

8. Synchronmotor nach Anspruch 7, dadurch gekennzeichnet, daß die Dauermagnetsegmente (41) auf dem Stützrohr (40) aufgeklebt sind.

## Claims

1. Brushless electric motor, especially a servo-motor, having a motor casing (10), which is designed in a pot-shaped manner, having a coaxial hub (11) and which is closed by a casing cover (32), having a hollow cylindrical first stator (26) mounted in the motor casing, which stator carries a multiphase stator winding (28, 29) located in slots (30, 31) and is designed as a wave or lap winding, coil or bar winding, or single-layer or double-layer winding, the motor having a rotor (23) connected to a drive shaft (12) the rotor being arranged coaxially to the stator inside the first stator (26) and with the formation of an air gap (24) and is designed as a short circuit rotor (asynchronous motor) or as a magnet wheel fitted with permanent magnets (synchronous motor) in the form of a low-mass hollow cylinder which is mounted on an approximately shell-shaped supporting disc (22) connected in a rotationally fixed manner to the drive shaft (12), and the motor having a second inner stator (27) arranged concentrically to the rotor (23) inside the first stator (26) and with the formation of a second air gap (25), and which carries a stator winding (29) of identical design to the first outer stator (26) and is supported on axial webs (21) which are seated outside on the hub (11) and extend as far as the base of the pot-shaped motor casing (10), the drive shaft (12) with the rotor (23) being borne in a rotatable manner inside the hub (11).

2. Motor according to Claim 1, characterised in that the slots (30, 31) are arranged in an identical radial orientation in both stators (26, 27), so that their slot centres are aligned with one another.

3. Motor according to Claim 1, characterised in that the slots (30) of one stator (26) are arranged displaced by half of a slot pitch with respect to the slots (31) of the other stator (27).

4. Motor according to one of Claims 1 to 3, characterised in that the rotor (23) is designed as a squirrel-cage rotor having conductor bars (35) inserted in closed slots (34) and two short-circuit rings connecting the conductor bars (35) to each other at both ends in each case (Figure 2).

5. Motor according to one of Claims 1 to 3, characterised in that the rotor (23) is designed as a double squirrel-cage rotor having conductor bars (36, 37) locating in slots (38, 39) arranged in two concentric tiers and two short-circuit rings connecting the conductor bars (36, 37) to each other at both ends in each case (Figures 3 and 4).

6. Motor according to Claim 5, characterised in that the slots (38, 39) are designed to be half open, the slot openings of the slots (38) arranged in the outer tier being directed towards the outer stator (26) and of the slots (39) arranged in the inner tier being directed towards the inner stator (27) (Figure 4).

7. Synchronous motor according to one of Claims 1 to 3, characterised in that the hollow cylindrical rotor (23) has a thin, non-magnetic supporting tube (40), on which permanent magnet segments (41), magnetised in the radial direction, are held by means of a non-magnetic binding (42), and in that the gaps (43) between the permanent magnet segments (41) are filled with magnetically non-conducting material (Figure 5).

8. Synchronous motor according to Claim 7, characterised in that the permanent magnet segments (41) are bonded to the supporting tube (40).

## Revendications

1. Moteur électrique sans balai, en particulier servo-moteur, avec un carter de moteur (10), qui est constitué en forme de pot avec un moyeu coaxial (11) et est fermé par un couvercle de carter (32), avec un premier stator (26) cylindrique, creux fixé dans le carter du moteur, stator qui porte un enroulement de stator (28, 29) polyphasé inséré dans des encoches (30, 31) constitué sous la forme d'un enroulement imbriqué, ondulé ou d'un enroulement à bobines ou à barres, avec un rotor (23) disposé coaxialement au stator à l'intérieur du premier stator (26) en ménageant un entrefer (24), rotor (23) relié à un arbre d'entraînement (12), et qui est constitué sous forme d'un cylindre creux de faible poids en tant qu'induit de court-circuit (moteur asynchrone) ou de roue polaire à aimants permanents segmentés (moteur synchrone), lequel cylindre creux est fixé à un disque support (22) relié de façon solidaire en rotation à l'arbre d'entraînement (12) et ayant à peu près la forme de coquilles, ainsi qu'à un deuxième stator intérieur (27) disposé de façon concentrique au rotor (23), en ménageant un deuxième entrefer (25), stator (27) qui porte un enroulement de stator (29) constitué de la même façon que le premier stator extérieur et s'appuie sur les entretoises axiales (21), qui reposent extérieurement sur le moyeu (11) et s'étendent jusqu'au fond du carter (10) du moteur en forme de pot, l'arbre d'entraînement (12) étant monté de façon à pouvoir tourner avec le rotor (23) à l'intérieur du moyeu (11).

2. Moteur selon la revendication 1, caractérisé en ce que les encoches (30, 31) sont disposées dans les deux stators (26, 27) dans la même orientation radiale de façon que les axes médians des encoches convergent.

3. Moteur selon la revendication 1, caractérisé en ce que les encoches (30) de l'un des stators (26) sont décalées par rapport aux encoches (31) de l'autre stator (27) d'un demi pas d'encoches.

4. Moteur selon l'une des revendications 1 à 3, caractérisé en ce que le rotor (23) est constitué sous la forme d'un induit à cage avec des barreaux d'échelle (35) insérés dans les encoches fermées (34) et deux anneaux de court-circuit reliant à chacune des deux extrémités les barreaux d'échelle (35) (figure 2).

5. Moteur selon l'une des revendications 1 à 3, caractérisé en ce que le rotor (23) est conçu comme un induit à double cage avec des barreaux d'échelle (36, 37) insérés dans des encoches (38, 39) disposées dans deux niveaux concentriques et avec deux anneaux de court-circuit reliant les barreaux d'échelle (36, 37) respectivement à chacune de leurs deux extrémités.

6. Moteur selon la revendication 5, caractérisé en ce que les encoches (38, 39) sont réalisées à de mi-ouvertes, les ouvertures des encoches étant tournées pour les encoches disposées dans le niveau extérieur vers le stator extérieur (26) et pour les encoches (39) disposées dans le niveau intérieur vers le stator intérieur (27) (figure 4).

7. Moteur synchrone selon l'une des revendications 1 à 3, caractérisé en ce que le rotor cylindrique creux 23 comporte un tuyau de soutien (40) non magnétique, mince, sur lequel dans le sens radial des segments (41) d'aimant permanent sont maintenus au moyen d'un bandage (42) non magnétique et en ce que les intervalles (43) entre les segments (41) d'aimant permanent sont remplis avec une matière magnétiquement non conductrice (figure 5).

8. Moteur synchrone selon la revendication 7, caractérisé en ce que les segments (41) d'aimant permanent sont collés sur le tube de soutien (40).

Fig. 1

Fig. 2

Fig. 3

Fig. 4

Fig. 5

Fig. 6